# EUROPÄISCHE PATENTSCHRIFT

(11) **EP 0 754 168 B1**
(45) Veröffentlichungstag und Bekanntmachung des Hinweises auf die Patenterteilung: **13.09.2000**
(21) Anmeldenummer: 95915854.4
(22) Anmeldetag: 06.04.1995
(51) Int. Cl.: C04B 35/628, C04B 35/117

(54) **VERFAHREN ZUR HERSTELLUNG HOMOGENER MEHRKOMPONENTEN-DISPERSIONEN UND DAVON ABGELEITETER PRODUKTE**
METHOD OF PRODUCING HOMOGENEOUS MULTI-COMPONENT DISPERSIONS AND PRODUCTS DERIVED FROM SUCH DISPERSIONS
PROCEDE DE PREPARATION DE DISPERSIONS HOMOGENES A PLUSIEURS CONSTITUANTS ET PRODUITS DERIVES DESDITES DISPERSIONS

(30) Priorität: 06.04.1994 DE 4411862
(43) Veröffentlichungstag der Anmeldung: 22.01.1997
(73) Patentinhaber: INSTITUT FÜR NEUE MATERIALIEN gemeinnützige GmbH, 66123 Saarbrücken (DE)
(72) Erfinder: SCHMIDT, Helmut, D-66130 Saarbrücken-Güdingen (DE); NASS, Rüdiger, D-66292 Riegelsberg (DE)
(74) Vertreter: Barz, Peter, Dr.
(86) Internationale Anmeldenummer: EP9501263
(87) Internationale Veröffentlichungsnummer: WO9527687

(56) Entgegenhaltungen:
- EP-A- 0 237 700
- EP-A- 0 591 698
- US-A- 5 348 760
- PATENT ABSTRACTS OF JAPAN vol. 9 no. 278 (C-312) & JP,A,06 123561 (KAO SEKKEN KK) 2.Juli 1985,
- CHEMICAL ABSTRACTS, vol. 121, no. 2, 11.Juli 1994 Columbus, Ohio, US; abstract no. 15642b, T.HAYASHI 'CHEMICAL PROCESSING OF CERAMIC COMPOSITE WITH SURFACE MODIFICATION THRU' METAL ALKOXIDE ROUTE' Seite 419; Spalte R; & FUNTAI KOGAKU KAISHI, Bd. 31, Nr. 1, 1994 JAPAN, Seiten 32-39,

## Beschreibung

Die vorliegende Erfindung betrifft ein Verfahren zur Herstellung homogener Mehrkomponenten-Dispersionen und davon abgeleiteter Produkte, insbesondere ein Verfahren zur Herstellung von homogenen Mehrkomponenten-Dispersionen, bei dem Teilchen mit einer mittleren Teilchengröße von vorzugsweise nicht mehr als 100 µm in einem wäßrigen und/oder organischen Medium dispergiert werden.

Bei der Herstellung von keramischen Werkstoffen, Gläsern und Kompositwerkstoffen werden die dafür benötigten feinteiligen Ausgangsstoffe, wie z.B. die Oxide, Nitride, Boride, Carbide und Carbonitride von Al, Si, Zr und Ti und die Silizide, Sulfide, Arsenide, Antimonide, Selenide, Phosphide und Telluride von Alkalimetallen, Erdalkalimetallen, Sc, Y, Ti, Zr, Nb, Ta, Cr, Mo, W, Fe, Co, Ni und der Lanthaniden in der Regel zunächst zu einer Suspension (Schlicker) der Ausgangsmaterialien in einem wäßrigen oder organischem Dispergiermedium verarbeitet. Der Schlicker wird nach entsprechender Konditionierung (Einstellung von Rheologie, Feststoffgehalt, Dispersionszustand etc.) entweder mit entsprechenden Formgebungsverfahren direkt zu einem Grünkörper verarbeitet oder zunächst in ein Pulver überführt, das entweder direkt zu einem Grünkörper gepreßt oder redispergiert wird und dann durch entsprechende Formgebungsverfahren zu einem Grünkörper geformt wird. Geeignete Formgebungsverfahren sind Foliengießen, Schlickergießen, Druckgießen, Elektrophorese, Spritzgießen, Gefriergießen, Zentrifugieren, Gel-Casting, Sedimentieren, Heißgießen und Gefrierspritzgießen. Aus dem Grünkörper erhält man schließlich durch Sintern den gewünschten Werkstoff bzw. Sinterkörper.

Zum Dichtsintern der meisten keramischen Ausgangsmaterialien sind Sinteradditive erforderlich, z.B. feindisperser Kohlenstoff (Ruß) und/oder Metalle wie z.B. feinteiliges Al und B oder aus den oben erwähnten Ausgangsmaterialien ausgewählte Stoffe. Dispergiert man diese Sinteradditive bei der Herstellung des Schlickers in wäßrigen oder organischen Systemen, treten aufgrund unterschiedlicher oberflächenchemischer Eigenschaften und/oder stark unterschiedlicher Teilchengrößen der Einzelkomponenten Schwierigkeiten auf, z.B. derart, daß eine unerwünschte Bildung von Agglomeraten und Inhomogenitäten in dem erhaltenen Mehrkomponenten-Schlicker beobachtet werden. Naturgemäß macht sich eine derartige Inhomogenität bzw. Agglomeratbildung im Schlicker auch ungünstig in den letztendlich daraus erhaltenen Werkstoffen bemerkbar.

Ziel der vorliegenden Erfindung ist deshalb die Bereitstellung eines Verfahrens zur Herstellung von Mehrkomponenten-Dispersionen von feindispersen Teilchen, insbesondere Teilchen einer mittleren Teilchengröße von nicht mehr als 100 µm, vorzugsweise nicht mehr als 50 µm und insbesondere nicht mehr als 10 µm, in denen die Teilchen sehr homogen verteilt sind und die sich dadurch zur Herstellung von festen Produkten, z.B. Sinterkörpern, mit ausgezeichneter Homogenität und daraus resultierenden vorteilhaften Eigenschaften eignen.

In der EP-A-591698, die hinsichtlich der Vertragsstaaten DE, FR, GB, IT, NL, SE, Stand der Technik gemäß Artikel 54(3) und (4) EPÜ ist, werden ein Verfahren zur Herstellung homogener Mehrkomponenten-Dispersionen bzw. Mischungen sowie solche daraus hergestellte Mehrkomponenten-Dispersionen bzw. Mischungen beschrieben. Dabei handelt es sich ausschließlich um Verfahren zur Herstellung von Sinterkörpern aus Siliciumcarbid oder Borcarbid, bei dem man das Siliciumcarbid oder Borcarbid in einem Medium suspendiert und negative oder positive Oberflächenladungen durch Einstellen des pH-Wertes erzeugt, ein Sinteradditiv, das Oberflächenladungen von der dem Siliciumcarbid oder Borcarbid entgegengesetzten Polarität aufweist, zumischt und den erhaltenen Schlicker, gegebenenfalls nach Bildung eines Sinterpulvers, zu einem Grünkörper formt und anschließend sintert.

Gegenstand der vorliegenden Erfindung ist ein Verfahren zur Herstellung von homogenen Mehrkomponenten-Dispersionen, bei dem feindisperse Teilchen in einem wäßrigen und/oder organischen Medium dispergiert werden, wobei man
(a) im Falle des Vorliegens von Teilchensorten mit (vergleichbarer oder deutlich unterschiedlicher (mittlerer) Teilchengröße und) schlecht bzw. inkompatibler Natur der an der Oberfläche der Teilchensorten vorhandenen Gruppen mindestens eine Sorte von Teilchen mit einer oder mehrerer Spezies A in Kontakt bringt, die über mindestens eine Gruppe B und mindestens eine Gruppe Y verfügen, wobei unter den eingesetzten Bedingungen die Gruppen B mit auf der Oberfläche dieser mindestens einen Sorte von Teilchen vorhandenen Gruppen X kovalente, ionische oder Komplexbindungen ausbilden und die Gruppen Y Gruppen sind, die hinsichtlich ihrer Natur mit den Oberflächengruppen der übrigen in der Dispersion vorhandenen Teilchensorte(n) kompatibel sind; oder
(b) im Falle des Vorliegens von Teilchensorten (mit vergleichbarer oder deutlich unterschiedlicher (mittlerer) Teilchengröße), von denen mindestens eine Sorte von Teilchen auf der Oberfläche Gruppen X aufweist und mindestens eine andere Sorte von Teilchen auf der Oberfläche Gruppen W aufweist, diese Teilchen mit einer oder mehrerer Spezies D in Kontakt bringt, die über mindestens eine Gruppe B und mindestens eine Gruppe E verfügen, wobei unter den eingesetzten Bedingungen zum einen die Gruppen X und die Gruppen B und zum andern die Gruppen E und die Gruppen W kovalente, ionische oder Komplexbindungen ausbilden; oder
(c) im Falle des Vorliegens von Teilchensorten, deren mittlere Teilchengrößen sich mindestens um den Faktor 3 unterscheiden, die Teilchen separat als solche oder in Dispersion mit einander entgegengesetzten Oberflächenladungen versieht und die so behandelten Teilchen dann vermischt.

Bei den zu dispergierenden Teilchen handelt es sich vorzugsweise um Teilchen aus Stoffen, die bei der Herstellung von keramischen Materialien, Gläsern und Kompositen (z.B. Keramik/Keramik, Glas/Keramik, Glas/Metall und Keramik/Metall) Verwendung finden können. Somit handelt es sich insbesondere um feste Teilchen anorganischen oder metallischen Ursprungs sowie Kohlenstoffteilchen. Besonders bevorzugt handelt es sich um Teilchen aus Si, B, Al, Ti, Zr, W, Mo, Cr und Zn und den davon abgeleiteten (Misch-)Oxiden, Oxidhydraten, Nitriden, Carbiden, Siliziden, Boriden und Carbonitriden. Konkrete Beispiele hierfür sind (gegebenenfalls hydratisiertes) Al₂O₃, ZrO₂, Si₃N₄, Mullit, Cordierit, Perowskite, z.B. BaTiO₃, PZT und PLZT, SiC, TiC, Ti(C,N), B₄C, BN, AlN, TiB₂, ZrB₂, ZrC, WC, MoSi₂, Chromcarbid, Aluminiumcarbid und ZnO sowie Ruß. Selbstverständlich können auch Teilchen aus anderen Materialien, wie z.B. den eingangs erwähnten, erfindungsgemäß eingesetzt werden. Im allgemeinen enthalten die erfindungsgemäß herzustellenden Dispersionen Teilchen aus mindestens zwei unterschiedlichen Materialien.

Weiter werden erfindungsgemäß bevorzugt solche Materialien eingesetzt, bei denen es sich um sogenannte "nanoskalige" bzw. "nanodisperse" oder um sogenannte "Sub-Mikron"-Teilchen bzw. -Pulver handelt. "Nanoskalig" bedeutet im vorliegenden Zusammenhang eine durchschnittliche Teilchengröße von nicht mehr als 100 nm, insbesondere nicht mehr als 50 nm und besonders bevorzugt nicht mehr als 30 nm, während keine spezielle untere Teilchengrößengrenze besteht, diese aber vorzugsweise 0,1 nm und insbesondere 1 nm beträgt. "Sub-Mikron" bedeutet im vorliegenden Zusammenhang eine mittlere Teilchengröße von größer 100 nm bis 1 µm.

Selbstverständlich können auch größere Teilchen(sorten) im erfindungsgemäßen Verfahren eingesetzt werden, doch sollte die (mittlere) Teilchengröße vorzugsweise 100 µm, insbesondere 50 µm und besonders bevorzugt 10 µm nicht übersteigen.

Die Varianten (a) bis (c) des erfindungsgemäßen Verfahrens dienen alle dazu, mindestens zwei Teilchensorten (in der Regel aus unterschiedlichen Materialien), die sich z.B. aufgrund ihrer unterschiedlichen Teilchengrößen und/oder unterschiedlichen Oberflächeneigenschaften als solche nur schlecht bzw. überhaupt nicht zu einigermaßen homogenen Dispersionen verarbeiten lassen, so zu modifizieren, daß sich ihre Oberflächen(eigenschaften) gleichen oder zumindest stark ähneln (Variante (a)), daß sich ihre Oberflächen gegenseitig elektrostatisch anziehen (Variante (c)) oder daß sie unter Einbeziehung ihrer Oberflächengruppen chemisch aneinandergebunden werden (Variante (b)).

Im folgenden werden die drei Varianten des erfindungsgemäßen Verfahrens näher diskutiert. Um die Darstellung zu vereinfachen, wird dabei von Zweikomponenten-Systemen ausgegangen, d.h. es sollen jeweils nur zwei Teilchensorten vorliegen, die sich entweder aufgrund ihrer deutlich unterschiedlichen Teilchengrößen und/oder aufgrund ihrer unterschiedlichen Oberflächeneigenschaften wenn überhaupt nur unter besonderen Vorkehrungen zu einer einigermaßen homogenen Dispersion verarbeiten lassen. Die vorliegende Erfindung ist aber nicht auf solche Zweikomponenten-Systeme beschränkt sondern es können auch drei, vier, fünf usw. Teilchensorten nebeneinander vorliegen, die sich auch hinsichtlich ihrer Teilchengröße und/oder Oberflächeneigenschaften ähneln oder gleichen können, solange nur mindestens eine Teilchensorte vorliegt, die mit den übrigen aus den obengenannten oder anderen Gründen nicht ohne weiteres homogene Dispersionen bilden kann. Auch ist es möglich, beim Vorliegen von mehr als zwei Teilchensorten zwei oder alle der erfindungsgemäßen Varianten (a) bis (c) miteinander zu kombinieren.

Die Variante (a) des erfindungsgemäßen Verfahrens ist z.B. dann ein vorteilhafter Weg zur Herstellung von homogenen Dispersionen, wenn sich die beiden Teilchensorten, die durchaus von vergleichbarer Größe sein können, hinsichtlich der Natur der Oberflächengruppen (deutlich) unterscheiden. Dies ist z.B. dann der Fall, wenn es sich bei den Oberflächengruppen X um polare bzw. hydrophile Gruppen wie z.B. -OH, -COOH usw. handelt, während die zweite Teilchensorte über Oberflächengruppen verfügt, die unpolar bzw. hydrophob sind, wie beispielsweise Kohlenwasserstoffreste (z.B. -CH₃). Naturgemäß führt eine derartige Konstellation normalerweise zu Dispersionen, in denen die Teilchen mit polaren Oberflächengruppen X bevorzugt in Nachbarschaft zu Teilchen mit ähnlichen Oberflächeneigenschaften, also ebenfalls mit Oberflächengruppen X, und die Teilchen mit unpolaren Oberflächengruppen bevorzugt in Nachbarschaft zu Teilchen mit ebenfalls unpolaren Oberflächengruppen vorliegen, d.h. zu keiner statistischen Verteilung der Teilchen und damit zu Inhomogenitäten.

Gemäß der erfindungsgemäßen Variante (a) läßt sich dieser Zustand auf verschiedene Weisen so ändern, daß die Teilchen hinsichtlich ihrer Oberflächeneigenschaften sehr ähnlich bzw. sogar identisch werden und dadurch eine statistische Verteilung derselben in der Dispersion möglich wird. Dabei ist allen Möglichkeiten gemeinsam, daß eine oder beide Teilchensorten an ihrer Oberfläche so modifiziert werden, daß sich die Oberflächengruppen derselben danach stark ähneln oder sogar gleichen (z.B. alle hydrophob oder alle hydrophil sind). Dies wird dadurch bewerkstelligt, daß die Teilchen mit den Oberflächengruppen X mit Spezies (Verbindungen) A umgesetzt werden, die zum einen über eine Gruppe B, die mit den besagten Gruppen X unter Ausbildung einer kovalenten, ionischen oder Komplexbindung reagiert, und zum anderen über eine Gruppe Y verfügen, die den Gruppen, die sich auf der Oberfläche der anderen Sorte von Teilchen befinden, hinsichtlich ihrer Natur sehr ähnlich bzw. sogar identisch ist. Im Endeffekt bedeutet diese Vorgehensweise, daß die Oberflächengruppen X praktisch durch für die Herstellung einer homogenen Dispersion geeignete(re) Oberflächengruppen Y ersetzt werden. Man muß sich jedoch darüber im Klaren sein, daß die Gruppen X nicht einfach entfernt werden, sondern in veränderter Form (nämlich als Teil einer kovalenten, ionischen oder Komplexbindung) noch immer vorhanden sind und lediglich quasi als Verankerungsstelle für die "neuen" Oberflächengruppen Y dienen. Im Idealfall sind die Gruppen auf der Oberfläche der anderen Teilchensorte ebenfalls Gruppen Y, wenngleich es in vielen Fällen auch ausreicht, wenn es sich bei diesen Oberflächengruppen um solche handelt, die hinsichtlich ihrer Natur derselben Klasse wie die Gruppen Y zuzuordnen sind. Beispielsweise ist es im allgemeinen ausreichend, daß wenn die Oberflächengruppen der anderen Teilchensorte saure Gruppen sind, die Gruppe Y ebenfalls eine saure Gruppe (z.B. eine Carbonsäure- oder Sulfonsäure-Gruppe) darstellt. Entsprechendes gilt selbstverständlich auch im Fall von beispielsweise basischen, unpolaren oder polaren Gruppen. Weiter kann es sich bei den Oberflächengruppen der anderen Teilchensorte bereits um solche handeln, die auf ähnliche Weise wie die Gruppen Y an der Oberfläche dieser anderen Teilchensorte befestigt wurden. Mit anderen Worten, es ist selbstverständlich auch möglich, die andere Teilchensorte, die beispielsweise Oberflächengruppen X' aufweist, mit Spezies A', die mindestens eine Gruppe B' und mindestens eine Gruppe Y' aufweisen, so zu modifizieren, daß letztendlich Oberflächengruppen Y' vorliegen, die den Oberflächengruppen Y gleichen oder zumindest hinsichtlich ihrer Natur mit diesen vergleichbar sind. Aus Gründen der Arbeitsökonomie wird es jedoch in aller Regel bevorzugt, nur eine Sorte von Teilchen so zu modifizieren, daß danach deren Oberflächengruppen mit den Oberflächengruppen der anderen Sorte von Teilchen kompatibel sind. Es kann jedoch auch der Fall auftreten, daß z.B. Spezies A mit geeigneter Gruppe B und geeigneter Gruppe Y nicht oder nur schwer zugänglich sind und es deshalb vorteilhafter ist, (leichter zugängliche) Spezies A mit mindestens einer Gruppe B und mindestens einer Gruppe V einzusetzen und dafür auch die Oberflächengruppen (z.B. Y) der anderen Sorte von Teilchen so zu modifizieren, daß sie mit den Gruppen V komopatibel (oder sogar identisch) sind.

Die Umsetzung der Teilchensorte mit den Oberflächengruppen X und den Spezies A kann entweder in Anwesenheit der anderen (gegebenenfalls bereits oberflächenmodifizierten) Teilchensorte (z.B. im Dispergiermedium) oder getrennt davon (vor der Herstellung der endgültigen Dispersion) erfolgen. Die letztere Variante hat den Vorteil, daß sie auch dann eingesetzt werden kann, wenn nicht auszuschließen ist, daß unter den eingesetzten Reaktionsbedingungen auch die Oberflächengruppen der anderen Teilchensorte mit den Gruppen B oder sogar den Gruppen Y reagieren oder die andere Teilchensorte zu irgendwelchen Störungen der Umsetzung zwischen den Gruppen X und B führen kann.

Die Vorgehensweise bei der obigen Umsetzung bzw. Oberflächenmodifizierung ist am Beispiel nanoskaliger Teilchen ausführlich in der DE-A-4212633 beschrieben, auf deren Offenbarung hiermit im vollen Umfang Bezug genommen wird. Wenn die Oberflächenmodifizierung der einen Teilchensorte in Abwesenheit der anderen Teilchensorte durchgeführt wird, kann das dabei eingesetzte Dispergiermedium danach in üblicher Weise entfernt werden (z.B. durch Filtration), woran sich ein Waschen und Trocknen der Teilchen anschließen kann. Diese Vorgehensweise hat auch den Vorteil, daß in der später herzustellenden homogenen Dispersion keine restlichen (d.h. nicht umgesetzten) Spezies A mehr vorhanden sind. Die so modifizierten Teilchen können dann zusammen mit der nicht modifizierten bzw. ebenfalls vorher in geeigneter Weise modifizierten anderen Teilchensorte im eigentlichen Dispergiermedium miteinander dispergiert werden, um eine homogene Dispersion herzustellen.

Konkrete Spezies A und geeignete Dispergiermedien usw. werden weiter unten noch angegeben.

Die Variante (b) des erfindungsgemäßen Verfahrens ist besonders vorteilhaft, wenn Teilchensorten mit deutlich unterschiedlicher Teilchengröße gemeinsam dispergiert werden sollen, ist jedoch auch auf die Dispergierung von Teilchensorten mit vergleichbarer Größe mit Vorteil anwendbar. Dennoch soll diese Variante (b) für den Fall der gemeinsamen Dispergierung von (deutlich) größeren Teilchen mit Oberflächengruppen X (z.B. Teilchen im Sub-Mikron- bzw. Mikron-Bereich) und (deutlich) kleineren Teilchen mit Oberflächengruppen W (z.B. nanoskaligen Pulvern) näher erläutert werden. Die Variante (b) unterscheidet sich von der Variante (a) im wesentlichen nur dadurch, daß die Gruppe Y der Spezies A, die im Fall der Variante (a) lediglich mit den Oberflächengruppen der anderen Teilchensorte kompatibel sein muß, durch die Gruppe E ersetzt wird, die mit den Oberflächengruppen W der anderen Teilchensorte unter Ausbildung einer kovalenten, ionischen oder Komplexbindung reagieren kann (ähnlich wie im Fall der Gruppen X und B). Obwohl auch im Fall der Variante (b) die Umsetzung zwischen den Gruppen X und B mit den Gruppen E und W gleichzeitig (im endgültigen Dispergiermedium) erfolgen kann, ist es bevorzugt, diese Umsetzungen nacheinander durchzuführen. Besonders bevorzugt ist es, zunächst die größeren Teilchen mit den Oberflächengruppen X mit den Spezies D umzusetzen (wie im Fall der Variante (a) mit den Spezies A), das dabei verwendete Dispergiermedium danach zu entfernen und die erhaltenen Teilchen zu waschen und gegebenenfalls zu trocknen. Daraufhin können die so oberflächenmodifizierten Teilchen mit den kleineren Teilchen mit Oberflächengruppen W zusammengebracht und umgesetzt werden, was vorteilhafterweise im für die endgültige Dispersion zu verwendenden Dispergiermedium geschieht, um eine erneute Entfernung des Reaktionsmediums zu vermeiden.

Sowohl für die Variante (a) als auch die Variante (b) gilt, daß die Spezies A bzw. D nicht notwendigerweise nur über eine Gruppe B und eine Gruppe Y bzw. E verfügen müssen, sondern daß es im Gegenteil in manchen Fällen vorteilhaft sein kann, wenn diese Spezies z.B. über zwei oder sogar drei Gruppen B bzw. E an den Teilchen mit den Oberflächengruppen X bzw. W verankert werden, zumindest solange gewährleistet ist, daß eine entsprechende mehrfache Verankerung aus sterischen Gründen überhaupt erfolgen kann.

Das soeben für den Fall größerer Teilchen mit Oberflächengruppen X und kleinerer Teilchen mit Oberflächengruppen W geschilderte Verfahren gemäß Alternative (b) kann quasi als chemische Beschichtung der größeren Teilchen mit den kleineren Teilchen aufgefaßt werden, wobei als Kupplungsmittel die Spezies D dienen. Demgegenüber kann das Verfahren gemäß Variante (c) des erfindungsgemäßen Verfahrens als elektrostatische Beschichtung von größeren Teilchen mit kleineren Teilchen bezeichnet werden. Bei dieser Variante muß in erster Linie dafür Sorge getragen werden, daß sich die Vorzeichen der Oberflächenladungen der beiden zu dispergierenden Teilchensorten (mit deutlich unterschiedlicher Teilchengröße) unterscheiden, so daß die größeren Teilchen aufgrund ihrer entgegengesetzten Oberflächenladung die kleineren Teilchen anziehen und umgekehrt. Naturgemäß ist dieses Verfahren um so effizienter, je höher die Oberflächenladungen der beteiligten Teilchen sind. Mit dem Ausdruck "deutlich unterschiedliche Teilchengröße" sollen hierin Teilchen gemeint sein, deren (mittlere) Teilchengrößen sich mindestens um den Faktor 3, vorzugsweise mindestens den Faktor 5 und noch bevorzugter mindestens den Faktor 10 unterscheiden.

Die Aufladung der Oberflächen der beteiligten Teilchen kann auf verschiedene Art und Weise erfolgen. Z.B. können eine oder beide Teilchensorten (separat) elektrostatisch aufgeladen werden und dann dem Dispergiermedium gemeinsam oder nacheinander zugeführt werden.

Gemäß einer besonders bevorzugten Ausführungsform der Variante (c) werden die größeren und die kleineren Teilchen zunächst separat dispergiert und dann werden die so hergestellten Dispersionen zusammengegeben und vermischt, wobei die pH-Werte der separaten Dispersionen so gewählt werden, daß sowohl in diesen Dispersionen als auch in der resultierenden Dispersion (nach dem Zusammengeben) die Zeta-Potentiale der Teilchensorten ein unterschiedliches Vorzeichen aufweisen und insbesondere so beschaffen sind, daß sie einen möglichst großen positiven bzw. einen möglichst großen negativen Wert besitzen.

Das Zeta-Potential ist ein Maß für die Zahl der erzeugten Oberflächenladungen. Es ist pH-abhängig und in Relation zum isoelektrischen Punkt des jeweiligen Materials entweder positiv oder negativ. Mit anderen Worten, je höher das Zeta-Potential desto höher die Aufladung der Teilchen und desto höher die Anziehungskraft für Teilchen entgegengesetzter Aufladung.

Vorzugsweise wird die Ausbildung negativer oder positiver Oberflächenladungen durch Zusatz einer Säure oder Base bewirkt bzw. unterstützt. Für diesen Zweck geeignete Säuren sind z.B. anorganische Säuren wie HCl, HNO₃, H₃PO₄ und H₂SO₄ sowie organische Carbonsäuren wie Essigsäure, Propionsäure, Citronensäure, Bernsteinsäure, Oxalsäure und Benzoesäure. Geeignete Basen sind z.B. NH₃, NaOH, KOH, Ca(OH)₂ sowie primäre, sekundäre und tertiäre aliphatische und aromatische Amine und Tetraalkylammoniumhydroxide. Voraussetzung für diese Ausführungsform der Variante (c) des erfindungsgemäßen Verfahrens ist jedoch, daß die ursprünglich eingesetzten Teilchen über Oberflächengruppen verfügen, die in Abhängigkeit vom gewählten pH-Wert (ausreichend) negativ oder positiv aufgeladen sind. Diese Anforderung wird von nicht-oberflächenmodifizierten Teilchen nicht immer erfüllt. Insbesondere muß berücksichtigt werden, daß zwei zu kombinierende Teilchensorten nicht nur jeweils über geeignete Oberflächengruppen, die in Abhängigkeit von pH-Wert positive oder negative Ladungen tragen, verfügen müssen, sondern daß diese Oberflächengruppen beim gewünschten pH-Wert der endgültigen Dispersion auch entgegengesetzte (und vorzugsweise möglichst große) Oberflächenladungen zeigen müssen, damit das Vorliegen starker Anziehungskräfte gewährleistet ist. So kann es auch im Fall der Variante (c) erforderlich sein, zumindest eine der beiden Teilchensorten an der Oberfläche so zu modifizieren, daß danach Teilchen mit Oberflächengruppen vorliegen, die zusammen mit der anderen Sorte von Teilchen die oben angegebenen Bedingungen erfüllen. Somit kann z.B. im Fall von größeren Teilchen mit Oberflächengruppen X, die in Kombination mit der anderen Teilchensorte für das pH-abhängige elektrostatische Beschichtungsverfahren nicht geeignet wären (z.B. weil beim gewünschten bzw. jedem pH-Wert die Zeta-Potentiale beider Teilchensorten dasselbe Vorzeichen aufweisen würden), so vorgegangen werden, daß man diese Teilchen zunächst mit Spezies A (wie oben in Variante (a) beschrieben) umsetzt, wobei die Gruppe Y der Spezies A eine solche ist, die beim gewünschten pH-Wert ein geeignetes Zeta-Potential aufweist. Wenn die andere Teilchensorte zwar ein Zeta-Potential mit "richtigem" Vorzeichen aber relativ geringem Wert aufweist, kann auch die zweite Teilchensorte entsprechend modifiziert werden, um danach über Oberflächengruppen zu verfügen, die beim gewünschten pH-Wert zwar immer noch dasselbe Vorzeichen aber einen größeren Wert des Zeta-Potentials hervorrufen.

Wenn im Fall der Variante (c) eine der Teilchensorten bereits in einer geeigneten (aufgeladenen) Form vorliegt, muß selbstverständlich nur die andere Teilchensorte geeignet aufgeladen werden, gegebenenfalls nach vorheriger Oberflächenmodifizierung (wie oben beschrieben).

Im folgenden werden die zur Oberflächenmodifizierung in den obigen Varianten (a) bis (c) des erfindungsgemäßen Verfahrens einsetzbaren Spezies näher beschrieben.

Im Fall der Spezies A und D sind die Gruppen B und Y bzw. B und E zum Beispiel durch eine einfache (kovalente) Bindung oder (vorzugsweise) durch einen Kohlenwasserstoffrest miteinander verbunden. Dieser Kohlenwasserstoffrest kann ein oder mehrere Heteroatome, wie z.B. Halogen, O, S und N einschließen, entweder als Teil des Grundgerüsts und/oder lediglich daran gebunden (insbesondere im Fall von Halogen). Beim Kohlenwasserstoffrest kann es sich um einen gesättigten oder ungesättigten, aliphatischen, cycloaliphatischen oder aromatischen Kohlenwasserstoffrest oder Kombinationen davon handeln und vorzugsweise weist dieser Rest ein Molekulargewicht auf, das 500, insbesondere 300 und besonders bevorzugt 200 nicht übersteigt. Insbesondere wird es bevorzugt, Verbindungsgruppen einzusetzen, deren Grundgerüst nicht mehr als 30, insbesondere nicht mehr als 20 und besonders bevorzugt nicht mehr als 10 Atome (Kohlenstoffatome plus Heteroatome) umfaßt. Konkrete Beispiele für Verbindungsgruppen sind z.B. C₂₋₂₀-(Cyclo)alk(en)ylengruppen, wie z.B. Ethylen, Propylen, Butylen, (Cyclo)pentylen und (Cyclo)hexylen, C₅₋₁₂-(Hetero) arylen, wie z.B. Phenylen, Naphthylen und Pyridylen, sowie Kombinationen einer oder mehrerer dieser Gruppen.

Die Natur der Gruppen B, E und Y in den Spezies A und D hängt selbstverständlich von der Natur der auf den Oberflächen der zu dispergierenden Teilchen vorhandenen Gruppen ab. Bevorzugte Gruppen B, E und Y sind jedoch solche der Formeln -COT, -SO₂T, -POT₂, -OPOT₂, -OH, -NHR¹ und -CO-CHR¹-CO-, wobei T für Halogen (F, Cl, Br oder I), -OCO-, -OR¹ und -NR¹₂ steht (und gleich oder verschieden sein kann) und R¹, gleich oder verschieden, H oder C₁₋₈-Alkyl (vorzugsweise C₁₋₄-Alkyl) repräsentiert, wobei Y zusätzlich auch eine Gruppe der Formel -CR²₃ sein kann, in der R², gleich oder verschieden, für Wasserstoff, Halogen (insbesondere F und Cl) und C₁₋₈-Alkyl (vorzugsweise C₁₋₄-Alkyl) steht und eine Gruppe R² auch OR³ oder SR³ (R³ = C₁₋₈-Alkyl oder C₆₋₁₂-Aryl) sein kann. Die zusätzlichen Bedeutungen für Y erklären sich daraus, daß Y eine Gruppe ist, die mit keiner anderen Gruppe unter Ausbildung einer kovalenten, ionischen oder Komplexbindung reagieren muß sondern lediglich den an den Oberflächen der anderen zu dispergierenden Teilchensorte vorhandenen Gruppen ähneln bzw. gleichen soll, wobei diese Gruppen auch hydrophobe (unpolare) Gruppen sein können.

Konkrete Beispiele für bevorzugte Spezies A und D sind z.B. die folgenden, die jedoch nicht als für die vorliegende Erfindung beschränkend aufgefaßt werden dürfen.

Mono- und Polycarbonsäuren mit 2 bis 12 Kohlenstoffatomen, wie beispielsweise Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure, Fumarsäure, Itaconsäure, Toluolsulfonsäure, Trifluoressigsäure, Stearinsäure, Trioxadecansäure und entsprechende Anhydride (wie z.B. Essigsäureanhydrid, Propionsäureanhydrid, Bernsteinsäureanhydrid und Maleinsäureanhydrid), Halogenide (wie z.B. Acetylchlorid, Propanoylchlorid, Butanoylchlorid und Valerylchlorid), Ester (z.B. Essigsäureethylester) und Amide (z.B. Acetamid).

Mono- und Polyamine, wie z.B. solche der allgemeinen Formel R₃₋ₙNHₙ, worin n = 0,1 oder 2 und die Reste R unabhängig voneinander Alkylgruppen mit 1 bis 12, insbesondere 1 bis 6 und besonders bevorzugt 1 bis 4 Kohlenstoffatomen darstellen (z.B. Methyl, Ethyl, n- und i-Propyl und Butyl) und Alkylen(insbesondere Ethylen- und Propylen-)amine, beispielsweise Ethylendiamin, Propylendiamin und Diethylentriamin.

β-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁₋₄-alkylester.

Verbindungen, die über mindestens zwei voneinander verschiedene funktionelle Gruppen verfügen, wie z.B. Alanin, Arginin, Asparagin, Asparaginsäure und andere Aminosäuren, sowie Betain, EDTA, Guanidinessigsäure, Guanidinpropionsäure, Guanidinbuttersäure, Azodicarbonamid, 8-Hydroxychinolin, 2,6-Pyridindicarbonsäure, Methacrylnitril, Diaminomaleonitril, Acetessigsäureimid, Guanin und Guanosin sowie Guanidincarbonat, Guanidinnitrat und Guanidinobenzimidazol.

Andere bevorzugte Spezies A und D zur Verwendung in der vorliegenden Erfindung sind solche, bei denen wenigstens eine der Gruppen B und Y bzw. B und E die Formel -MZₙR₃₋ₙ oder -AlZₘR₂₋ₘ aufweisen, in der M für Si, Ti oder Zr steht, Z eine mit einer Oberflächengruppe X oder W reaktive Gruppe ist, R eine mit einer Oberflächengruppe X oder W nicht-reaktive Gruppe darstellt und gleiche oder unterschiedliche Gruppen repräsentiert, wenn (3-n) gleich 2 ist, n, 1, 2 oder 3, vorzugsweise 1 oder 2, ist und m oder 1 oder 2 ist. Selbstverständlich können auch entsprechende Gruppen, in denen M bzw. Al durch Sc, Y, La, Ce, Nd, Nb, Ta, Mo, W, B usw. ersetzt sind, eingesetzt werden.

Besonders bevorzugt unter den obigen Gruppen werden solche, die Si enthalten. Konkrete Beispiele für entsprechende Spezies sind die folgenden:

Mercaptopropyltrimethoxysilan, 3-(Trimethoxysilyl)propylmethacrylat, 3-(Triethoxysilyl)propylbernsteinsäureanhydrid, Cyanoethyltrimethoxysilan, 3-Thiocyanatopropyltriethoxysilan, 3-(2-Aminoethylamino)propyltrimethoxysilan, 3-Aminopropyltriethoxysilan, 7-Oct-1-enyltrimethoxysilan, Phenyltrimeth-oxysilan, n-Butyltrimethoxysilan, n-Octyltrimethoxysilan, n-Decyltrimethoxysilan, n-Dodecyltriethoxysilan, n-Hexadecyl-trimethoxysilan, n-Octadecyltrimethoxysilan, n-Octadecyltri-chlorsilan, Dichlormethylvinylsilan, Diethoxymethylvinylsilan, Dimethyloctadecylmethoxysilan, tert-Butyldimethylohlor-silanmethyldisilazan, Diethoxydimethylsilan, Diethyltrimethylsilylphosphit, 2-(Diphenylmethylsilyl) ethanol, Diphenylsilandiol, Ethyl(diphenylmethylsilyl)acetat, Ethyl-2,2,5,5-tetramethyl-1,2,5-azadisilolidin-1-acetat, Ethyltriethoxysilan, Hydroxytriphenylsilan, Trimethylethoxysilan, Trimethylsilylacetat, Allyldimethylchlorsilan, (3-Cyanopropyl)dimethylchlorsilan und Vinyltriethoxysilan.

Zur (getrennten) Oberflächenmodifizierung werden die betreffenden Teilchen gewöhnlich in einem geeigneten, unter den Reaktionsbedingungen inerten Lösungsmittel (Dispergiermedium), beispielsweise Wasser, einem aliphatischen oder aromatischen Kohlenwasserstoff wie Hexan oder Toluol oder einem Ether wie Diethylether, Tetrahydropyran oder THF oder einem polaren, protischen oder aprotischen Lösungsmittel (beispielsweise einem Alkohol wie Methanol, Ethanol, n- und i-Propanol und Butanol, einem Keton, wie z.B. Aceton und Butanon, einem Ester, wie z.B. Essigsäureethylester, einem Amid, wie z.B. Dimethylacetamid und Dimethylformamid, einem Sulfoxid oder Sulfon, wie z.B. Sulfolan und Dimethylsulfoxid) suspendiert und mit dem Oberflächenmodifizierungsmittel (beispielsweise Spezies A oder Spezies D) in geeigneter Weise (gegebenenfalls bei erhöhter Temperatur und/oder in Anwesenheit eines Katalysators) umgesetzt.

Anschließend kann das Dispergiermittel abgezogen und das oberflächenmodifizierte Material gegebenenfalls gewaschen und getrocknet und in dem endgültigen Dispergiermedium (wäßrig und/oder organisch) redispergiert werden. Beispiele für geeignete Dispergiermedien sind die bereits oben als Beispiele für geeignete Medien für die Oberflächenmodifizierung genannten Lösungsmittel.

Das eingesetzte Dispergiermedium hat vorzugsweise einen Siedepunkt, der eine problemlose Entfernung desselben durch Destillation (gegebenenfalls unter Vakuum) ermöglicht. Bevorzugt werden Lösungsmittel mit einem Siedepunkt unter 200°C, insbesondere unter 150°C, obwohl auch die Verwendung von höhersiederiden Flüssigkeiten (z.B. mit Siedepunkten > 350°C) selbstverständlich möglich ist.

Im Fall der Herstellung von keramischen Materialien, Gläsern und Kompositen beträgt der Gehalt an (endgültigem) Dispergiermedium im allgemeinen 10 bis 90, vorzugsweise 15 bis 85 und insbesondere 20 bis 80 Vol.-%. Der Rest der Dispersion setzt sich aus (modifizierten) Ausgangspulvern, anorganischen und/oder organischen Prozeßhilfsmitteln und gegebenenfalls noch vorhandenen freien Modifizierungsmitteln (z.B. Spezies A oder Spezies D) zusammen.

Die erfindungsgemäß erhaltene homogene Dispersion kann entweder als solche weiterverarbeitet werden (siehe unten) oder das Dispergiermedium wird ganz oder teilweise (z.B. bis zu einer gewünschten Feststoffkonzentration) entfernt. Ein besonders bevorzugtes Verfahren zur Entfernung des Dispergiermediums (insbesondere wenn dieses Wasser umfaßt) ist die Gefriertrocknung in ihren verschiedenen Ausführungsformen (z.B. Gefriersprühtrocknung).

Die nach dem erfindungsgemäßen Verfahren erhaltene homogene Dispersion bzw. die trockene homogene Mehrkomponenten-Mischung aus keramischen Pulvern kann dann zwecks Herstellung von Grünkörpern bzw. Sinterkörpern weiterverarbeitet werden. Der erfindungsgemäß erhältliche homogene keramische Schlicker kann z.B. direkt durch die eingangs erwähnten Formgebungsverfahren, z.B. durch Foliengießen, Schlickergießen, Druckgießen, Spritzgießen, Elektrophorese, Gel-Casting, Gefrierguß, Gefrierspritzguß oder Zentrifugieren, zu einem Grünkörper geformt werden.

Alternativ kann, wie oben erwähnt, aus dem Schlicker z.B. durch Filtration, Abdampfen des Dispergiermediums, Sprühtrocknen oder Gefriertrocknen ein Sinterpulver gewonnen werden. Dieses wird dann entweder als solches zu einem Grünkörper gepreßt oder aber man redispergiert das Sinterpulver, vorzugsweise unter Verwendung eines Tensids als Dispergierhilfe, und verarbeitet dann die Suspension nach einem der obengenannten Formverfahren zu einem Grünkörper. Als Dispergierhilfen eignen sich in dieser Ausführungsform z.B. anorganische Säuren, wie HCl, HNO₃ und H₃PO₄; organische Säuren, wie Essigsäure, Propionsäure, Citronensäure und Bernsteinsäure; anorganische Basen, wie NaOH, KOH und Ca(OH)₂; und organische Basen, wie primäre, sekundäre und tertiäre Amine sowie Tetraalkylammoniumhydroxide; organische Polyelektrolyte, wie Polyacrylsäure, Polymethacrylsäure, Polysulfonsäuren, Polycarbonsäuren, Salze (z.B. Na oder NH₄) dieser Verbindungen, N,N-Dialkylimidazoline und N-Alkylpyridiniumsalze; oder nicht-ionische Tenside, wie Polyethylenoxide, Fettsäurealkylolamide, Saccharosefettsäureester, Trialkylaminoxide und Fettsäureester von Polyhydroxyverbindungen.

Der Grünkörper kann schließlich bei üblichen Temperaturen, die in den meisten Fällen im Bereich von 1000 bis 2500°C liegen, zu einem Sinterkörper gesintert werden. In bestimmten Fällen können die einsetzbaren Sintertemperaturen aber auch deutlich niedriger sein, z.B. 250°C oder darunter.

Die folgenden Beispiele dienen der weiteren Erläuterung der vorliegenden Erfindung, ohne diese jedoch zu beschränken.

### BEISPIEL 1

### Herstellung von Al₂O₃/SiC-Dispersionen gemäß Variante (a)

(a) Oberflächenmodifizierung von SiC-Pulvern in Toluol
   In einem 500 ml-Dreihalsrundkolben, ausgestattet mit KPG-Rührer, Rückflußkühler und Trockenrohr, wurden 70 ml Toluol vorgelegt, dessen Wassergehalt mittels Karl-Fischer-Titration ermittelt wurde. Um reproduzierbare Ergebnisse zu gewährleisten, wurde dabei festgelegt, daß sich der Wassergehalt des eingesetzten Toluol in einem Bereich von 0,10 ± 0,04 Gew.-% bewegen mußte.
   In weiteren 30 ml Toluol wurden 1,27 g Aminoethylaminopropyltrimethoxysilan bzw. 1,74 g 3-(Triethoxysilylpropyl)bernsteinsäureanhydrid gelöst und unter Rühren in den Dreihalsrundkolben gegeben. Nach der Zugabe von 50 g SiC-Pulver (UF 45, Fa.Lonza) wurde die Suspension 5 Stunden bei 130°C gehalten. Das modifizierte SiC-Pulver wurde danach abfiltriert und dreimal mit jeweils 100 ml Toluol gewaschen. Nach 16-stündigem Trocknen bei 120°C in einem Trockenschrank wurde das Pulver für die Schlickerherstellung aufgemahlen.
   Eine analoge Versuchsvorschrift wurde auch für die Modifizierung von Si und B₄C eingesetzt. Für 50 g Pulver wurden dabei jeweils 2,46 g (B₄C) bzw. 0,68 g (Si) 3-(Triethoxysilylpropyl)bernsteinsäureanhydrid oder 1,80 g (B₄C) bzw. 0,49 g (Si) Aminoethylaminopropyltrimethoxysilan eingesetzt.
(b) Vereinigung von Al₂O₃ und SiC
   In 100 ml destilliertem Wasser wurden 2 g eines Doppelkammpolymers mit sauren funktionellen Gruppen (Dapral EN 1469, Fa.ICI) gelöst und dann wurden 5,6 g des gemäß (a) mit Aminoethylaminopropyltrimethoxysilan oberflächenmodifizierten SiC-Pulvers zugegeben und mittels Ultraschall dispergiert. Darauf erfolgte die Zugabe von 128 g Al₂O₃-Pulver (CS 400 M, Fa.Martinswerk). Die resultierende Suspension wurde mittels Ultraschall vordispergiert, während die endgültige Homogenisierung der Suspension durch eine 2-stündige Mahlung in einer Rührwerkskugelmühle (1000 UpM) erfolgte.
   Da die oberflächenchemischen Eigenschaften von SiC durch die vorgeschaltete Modifizierung desselben denen von Al₂O₃ im wesentlichen gleich waren, konnte eine homogene, stabile Zweikomponenten-Suspension mit 35 Vol.-% Feststoffgehalt und 5 Vol.-% SiC-Anteil hergestellt werden. Die Viskosität der Suspension betrug bei einer Scherrate von 200 s⁻¹ 12 mPa.s. Aus diesem Schlicker wurden durch Schlickerguß in Gipsformen Formkörper mit relativen Gründichten von 59-62% hergestellt, die bei 1800°C in fließender Stickstoffatmosphäre zu Sinterkörpern mit einer relativen Dichte über 98% gesintert wurden. Die Sinterkörper wiesen eine homogene Verteilung der SiC-Teilchen auf. Die mittlere Korngröße der Sinterkörper lag zwischen 2 und 2,5 µm, während Festigkeiten zwischen 650 und 700 MPa gemessen wurden.
   Überraschenderweise führt die drucklose Verdichtung bei 1800°C somit zu sehr hohen Dichten unter Beibehaltung eines extrem feinen Gefüges. Dies kann nur auf eine deutlich verbesserte Homogenität des Schlickers zurückgeführt werden.

### BEISPIEL 2

### Chemische Beschichtung von SiC mit nanoskaligem Ruß gemäß Variante (b)

3,75 g Ruß mit Oberflächen-Carboxylgruppen (FW 200) wurden in einem Liter Toluol vorgelegt. Unter Rühren erfolgte die Zugabe von 150 g des gemäß Beispiel 1 (a) mit Aminoethylaminopropyltrimethoxysilan modifizierten SiC-Pulvers. Nach beendeter Zugabe wurde die Suspension 5 Stunden bei 130°C am Wasserabscheider umgesetzt. Nach dieser Reaktionszeit wurde das modifizierte Pulver abfiltriert, dreimal mit jeweils 100 ml Toluol gewaschen und bei 110°C 16 Stunden im Trockenschrank getrocknet. Es wurde ein optisch homogenes, tiefschwarzes Pulver erhalten.

### BEISPIEL 3

### Herstellung von Al₂O₃/TiN-Schlickern mit nanoskaligem TiN durch elektrostatische Beschichtung gemäß Variante (c)

Analog zur Vorgehensweise von Beispiel 1 wurden Al₂O₃-Schlicker mit TiN-Anteilen zwischen 1 und 5 Vol.-% hergestellt. Die Grundlage für die Herstellung homogener Al₂O₃/TiN-Schlicker über elektrostatische Beschichtung bilden die Zeta-Potentiale von Al₂O₃ und TiN, die im pH-Bereich zwischen 3 und 8 entgegengesetzte Vorzeichen aufweisen. Die Herstellung der Komposit-Schlicker erfolgte auf folgende Weise:
(a) Herstellung einer wäßrigen Al₂O₃-Suspension
   Zur Herstellung einer wäßrigen Al₂O₃-Suspension (Al₂O₃-Pulver AKP 50 der Fa. Sumitomo) wurde die entsprechende Menge Wasser vorgelegt und eine eingewogene Menge an Al₂O₃-Pulver langsam unter ständigem Rühren zugegeben.
   Der pH-Wert wurde durch HCl-Zugabe bei Werten zwischen 3 und 4 gehalten. Die Suspension wurde zwischendurch ultrabeschallt, um eine effektive Dispergierung zu erzielen.
(b) Herstellung einer nanodispersen TiN-Suspension
   Es wurde analog zu (a) vorgegangen, wobei als TiN ein nanoskaliges, analog dem Verfahren von Beispiel 1(a) oberflächenmodifiziertes Pulver verwendet wurde. Der pH-Wert der Suspension wurde mittels Tetrabutylammoniumhydroxid zwischen 3 und 9 gehalten.
(c) Herstellung der endgültigen Dispersion
   Die in (a) und (b) oben hergestellten Al₂O₃- und TiN-Suspensionen wurden unter ständigem Rühren zusammengemischt und ultrabeschallt. Nach der Mischung beider Suspensionen stellten sich in dem Komposit-Schlicker pH-Werte zwischen 4 und 5 ein.
(d) Weiterverarbeitung
   Die Stabilisierung des Komposit-Schlickers erfolgte durch Zugabe eines nichtionischen Schutzkolloids in einer Konzentration von 2 Gew.-% (bezogen auf Al₂O₃ und TiN) (Tween^{R} 80, ICI).
   Die Mengen an Dispergiermedium (Wasser), Al₂O₃ und TiN sowie das Verhältnis Al₂O₃/TiN waren so bemessen, daß Schlicker mit 1 bis 5 Vol-% nanoskaligem TiN und 20 bis 30 Vol.-% Feststoffgehalt realisiert wurden (siehe Tabelle 1).
   Die resultierenden Schlicker können direkt für Formgebungsprozesse wie Schlickergießen oder Schlickerdruckgießen eingesetzt werden oder nach einer Aufkonzentrierung zu Extrusionsmassen verarbeitet werden. Durch Schlickergießen hergestellte Grünkörper wiesen eine extrem homogene Verteilung der nanodispersen TiN-Teilchen in der Al₂O₃-Matrix auf.

**TABELLE 1**

| Zahlenbeispiel zur Herstellung von 20 bzw. 30 Vol.-%igen Al₂O₃/TiN-Kompositschlickern mit TiN-Anteilen von 1 bis 5 Vol.-% (für 100 ml Schlicker) | | | | |
|---|---|---|---|---|
| TiN-Anteil [Vol.-%] | Feststoffgehalt [Vol.-%] | | | |
| | 20 | | 30 | |
| | Al₂O₃-Suspension | TiN-Suspension | Al₂O₃-Suspension | TiN-Suspension |
| 1,0 | 78 g Al₂O₃ in 50 ml H₂O, pH = 3 -4 | 1 g TiN in 30 ml H₂O, pH = 8 - 9 | 118 g Al₂O₃ in 60 ml H₂O, pH = 3 -4 | 1,56 g TiN in 10 ml H₂O, pH = 8 -9 |
| Schutzkolloid | 1,58 g | | 2,40 g | |
| 2,5 | 77 g Al₂O₃ in 50 ml H₂O, pH = 3 -4 | 2,6 g TiN in 30 ml H₂O, pH = 8 - 9 | 116 g Al₂O₃ in 60 ml H₂O, pH = 3 -4 | 3,90 g TiN in 10 ml H₂O, pH = 8 -9 |
| Schutzkolloid | 1,59 g | | 2,41 g | |
| 5,0 | 75 g Al₂O₃ in 50 ml H₂O, pH = 3 -4 | 5,21 g TiN in 30 ml H₂O, pH = 8 -9 | 113 g Al₂O₃ in 60 ml H₂O, pH = 3 -4 | 7,8 g TiN in 10 ml H₂O, pH = 8 -9 |
| Schutzkolloid | 1,60 g | | 2,42 g | |

### BEISPIEL 4

### Herstellung homogener Al₂O₃/SiC-Komposit-Schlicker durch elektrostatische Beschichtung gemäß Variante (c)

Aufgrund unterschiedlicher oberflächenchemischer Eigenschaften weisen die Al₂O₃- und SiC-Teilchen in wäßrigen Suspensionen im pH-Bereich zwischen 3 und 8 Oberflächenladungen mit entgegengesetzten Vorzeichen auf. Damit sind die Voraussetzungen für eine elektrostatische Beschichtung von Al₂O₃ mit SiC (oder umgekehrt) in diesem pH-Bereich erfüllt.

Beruhend auf diesem Prinzip wurden auf folgende Weise wäßrige Al₂O₃-Schlicker mit SiC-Anteilen zwischen 5 und 15 Vol.-% hergestellt:
(a) Herstellung einer wäßrigen Al₂O₃-Suspension
   Zur Herstellung einer wäßrigen Al₂O₃-Suspension (Al₂O₃-Pulver CS 400 M, Fa.Martinswerk, d₅₀ ≈ 400 nm) wurde die entsprechende Menge entionisierten Wassers vorgelegt und eine eingewogene Menge an Al₂O₃-Pulver wurde unter ständigem Rühren zugegeben. Der pH-Wert wurde hierbei durch HCl-Zugabe bei Werten zwischen 3 und 4 gehalten. Die Suspension wurde zwischendurch ultrabeschallt, um eine effektive Dispergierung zu erzielen.
(b) Herstellung der wäßrigen SiC-Suspension
   Es wurde analog zu (a) vorgegangen, wobei als SiC-Pulver das nach Beispiel 1(a) oberflächenmodifizierte Pulver (TF 45, Fa.Lonza; mittlere Teilchengröße 90 nm) verwendet wurde. Der pH-Wert der Suspension wurde durch Zugabe von verdünntem Ammoniak zwischen 6 und 7 gehalten.
(c) Herstellung der endgültigen Dispersion
   Die gemäß (a) und (b) oben hergestellten Suspensionen wurden unter ständigem Rühren zusammengemischt. Nach der Umsetzung stellte sich im resultierenden Schlicker ein pH-Wert zwischen 4 und 5 ein.
(d) Weiterverarbeitung
   Die Stabilisierung des Komposit-Schlickers erfolgte durch Zugabe eines nichtionischen Schutzkolloids (Tween^{R} 80, Fa.ICI) in einer Konzentration von 2 Gew.-% bezogen auf die Gesamtfeststoffmasse.
   Die hergestellten Schlicker sind in Tabelle 2 zusammengefaßt.

An den Schlickern mit 5 Vol.-% SiC und Feststoffgehalten von 30 Vol.-% wurden bei Scherraten von 200 s⁻¹ Viskositäten von 16 mPa.s. gemessen. Nach dem Schlickergießen in Gipsformen wurden aus diesem Schlicker Grünkörper mit Gründichten zwischen 0,56 und 0,58 erhalten, die sich durch eine sehr homogene SiC-Verteilung in der Al₂O₃-Matrix auszeichneten. Diese Grünkörper wurden bei 1800°C in fließender Stickstoffatmosphäre drucklos zu Sinterkörpern mit relativen Dichten von über 98% gesintert, an denen Biegebruchfestigkeiten von über 700 MPa gemessen wurden. Die homogene SiC-Verteilung in den Grünkörpern führte nach dem Sintern zu einem Gefüge mit mittleren Korngrößen zwischen 2 und 3 µm, was für ein Al₂O₃-Pulver mit mittleren Ausgangsteilchengrößen von 400 nm und für eine Sintertemperatur von 1800°C sehr fein war.

**TABELLE 2**

| Zahlenbeispiel zur Herstellung von 20 bzw. 30 Vol.-%igen Al₂O₂/SiC-Kompositschlickern mit SiC-Anteilen zwischen 5 und 15 Vol.-% (für 100 ml Schlicker) | | | | |
|---|---|---|---|---|
| SiC-Anteil [Vol.-%] | Feststoffgehalt [Vol.-%] | | | |
| | 20 | | 30 | |
| | Al₂O₃-Suspension | SiC-Suspension | Al₂O₃-Suspension | SiC-Suspension |
| 5,0 | 75,6 g Al₂O₃ in 70 ml H₂O, pH = 3 -4 | 3,2 g SiC in 10 ml H₂O, pH = 6 - 7 | 113 g Al₂O₃ in 60 ml H₂O, pH = 3 -4 | 4,8 g SiC in 10 ml H₂O, pH = 6 -7 |
| Schutzkolloid | 1,57 g | | 2,35 g | |
| 10 | 71,4 g Al₂O₃ in 70 ml H₂O, pH = 3 -4 | 6,4 g SiC in 10 ml H₂O, pH = 6 - 7 | 107 g Al₂O₃ in 60 ml H₂O, pH = 3 -4 | 9,6 g SiC in 10 ml H₂O, pH = 6 -7 |
| Schutzkolloid | 1,55 g | | 2,33 g | |
| 15 | 67,5 g Al₂O₃ in 60 ml H₂O, pH = 3 -4 | 9,69 g SiC in 20 ml H₂O, pH = 6 -7 | 101,2 g Al₂O₃ in 55 ml H₂O, pH = 3 - 4 | 14,4 g SiC in 15 ml H₂O, pH = 6 -7 |
| Schutzkolloid | 1,54 g | | 2,31 g | |

Die folgenden Beispiele sollen die Oberflächenmodifizierung von für die Herstellung von keramischen Materialien geeigneten Teilchen weiter veranschaulichen.

### BEISPIEL 5

### Oberflächenmodifizierung von Ruß

In einem 2 l-Dreihalsrundkolben, ausgestattet mit KPG-Rührer, Rückflußkühler und Trockenrohr, wurden 50 g Ruß vorgelegt. Zu diesem Ruß wurden 1,3 l Toluol gegeben, dessen Wassergehalt vor der Modifizierungsreaktion mittels Karl-Fischer-Titration ermittelt wurde. Um reproduzierbare Ergebnisse zu gewährleisten, wurde dabei festgelegt, daß sich der Wassergehalt des eingesetzten Toluol in einem Bereich von 0,10 ± 0,04 Gew.-% bewegen mußte.

In weiteren 0,2 l Toluol wurden 45,4 g Aminoethylaminopropylbernsteinsäureanhydrid gelöst und unter Rühren in den Dreihalsrundkolben gegeben. Die resultierende Suspension wurde 5 Stunden bei 130°C gehalten, worauf der oberflächenmodifizierte Ruß abfiltriert und dreimal mit jeweils 100 ml Toluol gewaschen wurde. Nach einer 16-stündigen Trocknung bei 120°C in einem Trockenschrank wurde das Pulver aufgemahlen.

### BEISPIEL 6

### Oberflächenmodifizierung von B₄C

In einem 500 ml-Dreihalsrundkolben, ausgestattet mit KPG-Rührer, Rückflußkühler und Trockenrohr, wurden 70 ml Toluol vorgelegt, dessen Wassergehalt vor der Modifizierungsreaktion mittels Karl-Fischer-Titration ermittelt wurde. Um reproduzierbare Ergebnisse zu gewährleisten, wurde dabei festgelegt, daß sich der Wassergehalt des eingesetzten Toluol in einem Bereich von 0,10 ± 0,04 Gew.-% bewegen mußte.

In weiteren 30 ml Toluol wurden 1,80 g Aminoethylaminopropyltrimethoxysilan bzw. 2,46 g 3-(Triethoxysilylpropyl)bernsteinsäureanhydrid gelöst und unter Rühren in den Dreihalsrundkolben gegeben. Nach der Zugabe von 50 g B₄C wurde die Suspension 5 Stunden bei 130°C umgesetzt, worauf das modifizierte Pulver abfiltriert und dreimal mit jeweils 100 ml Toluol gewaschen wurde. Nach einer 16-stündigen Trocknung bei 120°C in einem Trockenschrank wurde das Pulver für die Schlickerherstellung aufgemahlen.

### BEISPIEL 7

### Oberflächenmodifizierung von n-TiN-Pulver

Zur Modifizierung von n-TiN-Pulver wurden 200 ml H₂O/Ethanol-Mischungen (1:1) in einem Dreihalskolben mit Rückflußkühler und Trockenrohr vorgelegt und 0,7 g Guanidinpropionsäure wurden dazugegeben. Nachdem die Guanidinpropionsäure unter Erhitzen und Rühren aufgelöst war, wurden 10 g n-TiN-Pulver portionsweise unter Rühren zugegeben, worauf 4 Stunden unter Rückfluß (90°C) erhitzt wurde. Die heiße Suspension wurde dann über eine Filternutsche (Porenweite 3 bis 6 µm) abfiltriert und gründlich mit der H₂O/Ethanol-Mischung gewaschen, worauf das Filtrat 10 Stunden bei 90°C getrocknet wurde. Das getrocknete Pulver konnte auf eine mittlere Teilchengröße von bis zu 40 nm redispergiert werden.

## Patentansprüche (Patentansprüche für folgende(n) Vertragsstaat(en): DE, FR, GB, IT, NL, SE)

1. Verfahren zur Herstellung von homogenen Mehrkomponenten-Dispersionen, bei dem feindisperse Teilchen in einem wäßrigen und/oder organischen Medium dispergiert werden, dadurch gekennzeichnet, daß man
(a) im Falle des Vorliegens von Teilchensorten mit schlecht bzw. inkompatibler Natur der an der Oberfläche der Teilchensorten vorhandenen Gruppen X mindestens eine Sorte von Teilchen mit einer oder mehreren Spezies A in Kontakt bringt, die über mindestens eine Gruppe B und mindestens eine Gruppe Y verfügen, wobei unter den eingesetzten Bedingungen die Gruppen B mit auf der Oberfläche dieser mindestens einen Sorte von Teilchen vorhandenen Gruppen X kovalente, ionische oder Komplexbindungen ausbilden und die Gruppen Y Gruppen sind, die hinsichtlich ihrer Natur mit den Oberflächengruppen der übrigen in der Dispersion vorhandenen Teilchensorte(n) kompatibel sind; oder
(b) im Falle des Vorliegens von Teilchensorten, von denen mindestens eine Sorte von Teilchen auf der Oberfläche Gruppen X aufweist und mindestens eine andere Sorte von Teilchen auf der Oberfläche Gruppen W aufweist, diese Teilchen mit einer oder mehreren Spezies D in Kontakt bringt, die über mindestens eine Gruppe B und mindestens eine Gruppe E verfügen, wobei unter den eingesetzten Bedingungen zum einen die Gruppen X und die Gruppen B und zum anderen die Gruppen E und die Gruppen W kovalente, ionische oder Komplexbindungen ausbilden; oder
(c) im Falle des Vorliegens von Teilchensorten, deren mittleren Teilchengrößen sich mindestens um den Faktor 3 unterscheiden, die Teilchen separat als solche oder in Dispersion mit einander entgegengesetzten Oberflächenladungen versieht und die so behandelten Teilchen dann vermischt,
mit der Maßgabe, daß bei Vorliegen von Siliciumcarbid und mindestens einem anderen Keramikmaterial als Teilchensorten im Fall (a) die Kompatibilität der Teilchensorten nicht durch Oberflächenladungen derselben Polarität erreicht wird.

2. Verfahren nach Anspruch 1 (a), dadurch gekennzeichnet, daß es sich bei den Gruppen Y und den Oberflächengruppen der besagten übrigen Teilchensorte(n) der Dispersion jeweils um hydrophile (lipophobe) oder hydrophobe (lipophile) Gruppen handelt.

3. Verfahren nach Anspruch 2, dadurch gekennzeichnet, daß es sich bei den Gruppen Y und den Oberflächengruppen der besagten übrigen Teilchensorte(n) der Dispersion jeweils um saure oder basische Gruppen oder jeweils um hydrophobe Gruppen handelt.

4. Verfahren nach Anspruch 1 (b), dadurch gekennzeichnet, daß eine Sorte von Teilchen deutlich größer ist als die andere(n) Sorte(n) von Teilchen.

5. Verfahren nach Anspruch 1 (c), dadurch gekennzeichnet, daß man die größeren und die kleineren Teilchen separat dispergiert und die so hergestellten Dispersionen zusammengibt und vermischt, wobei die pH-Werte der separaten Dispersionen so gewählt werden, daß sowohl in diesen Dispersionen als auch in der resultierenden Dispersion die Zeta-Potentiale der Teilchensorten ein unterschiedliches Vorzeichen aufweisen.

6. Verfahren nach Anspruch 1 (c), dadurch gekennzeichnet, daß man zumindest eine Teilchensorte elektrostatisch auflädt, bevor man sie mit der anderen (entgegengesetzt geladenen) Teilchensorte in Kontakt bringt.

7. Verfahren nach irgendeinem der Ansprüche 1 bis 6, dadurch gekennzeichnet, daß die zu dispergierenden Teilchen aus festen Teilchen anorganischen oder metallischen Ursprungs, insbesondere Teilchen solcher Substanzen, die bei der Herstellung keramischer Materialien Verwendung finden können, und Kohlenstoffteilchen ausgewählt sind und vorzugsweise eine Teilchengröße im Bereich von 0,1 nm bis 10 µm aufweisen.

8. Verfahren nach irgendeinem der Ansprüche 1 bis 7, dadurch gekennzeichnet, daß die Teilchen solche aus Si, B, Al, Ti, Zr, W, Mo, Cr, Zn und den davon abgeleiteten (Misch-)Oxiden, Oxidhydraten, Nitriden, Carbiden, Siliziden, Boriden und Carbonitriden und Mischungen davon umfassen.

9. Verfahren nach irgendeinem der Ansprüche 1 bis 8, dadurch gekennzeichnet, daß mindestens eine der zu dispergierenden Teilchensorten eine mittlere Teilchengröße nicht über 100 nm aufweist.

10. Verfahren nach irgendeinem der Ansprüche 1 bis 4 und 7 bis 9, dadurch gekennzeichnet, daß die Gruppen B und Y bzw. die Gruppen B und E durch gegebenenfalls Heteroatome umfassende Kohlenwasserstoffreste miteinander verbunden sind.

11. Verfahren nach irgendeinem der Ansprüche 1 bis 4 und 7 bis 10, dadurch gekennzeichnet, daß die Spezies A bzw. D mindestens eine Gruppierung der Formel -MZₙR₃₋ₙ oder -AlZₘR₂₋ₘ umfassen, in der M für Si, Ti oder Zr steht, Z eine mit einer Oberflächengruppe X oder W reaktive Gruppe ist, R eine mit einer Oberflächengruppe X oder W nicht-reaktive Gruppe darstellt und gleiche oder unterschiedliche Gruppen repräsentiert, wenn (3-n) gleich 2 ist, n 1, 2 oder 3 ist und m 1 oder 2 ist.

12. Verfahren nach irgendeinem der Ansprüche 1 bis 4 und 7 bis 11, dadurch gekennzeichnet, daß mindestens eine der Gruppen B, E und Y ausgewählt wird aus Gruppen der Formel -COT, -SO₂T, -POT₂, -OPOT₂, -OH, -NHR¹ und -CO-CHR¹-CO-, wobei T für Halogen, -OCO-, -OR¹ und -NR¹₂ steht (und gleich oder verschieden sein kann) und R¹, gleich oder verschieden, H oder C₁₋₈-Alkyl repräsentiert und Y zusätzlich eine Gruppe der Formel -CR²₃ sein kann, in der R², gleich oder verschieden, für Wasserstoff, Halogen und C₁₋₈-Alkyl steht und eine Gruppe R² auch OR³ oder SR³ (R³ = C₁₋₈-Alkyl oder C₆₋₁₂-Aryl) sein kann.

13. Homogene Dispersionen, erhältlich gemäß dem Verfahren von irgendeinem der Ansprüche 1 bis 12.

14. Verfahren zur Herstellung von homogenen Mehrkomponenten-Mischungen aus feindispersen Teilchen, dadurch gekennzeichnet, daß man aus den Dispersionen gemäß Anspruch 13 das Dispergiermedium entfernt und die so erhaltenen Teilchen gegebenenfalls wäscht, trocknet und/oder calciniert.

15. Verfahren zur Herstellung keramischer Materialien, Gläser und Komposite, dadurch gekennzeichnet, daß man darin homogene Dispersionen gemäß Anspruch 13 einsetzt.

## Patentansprüche (Patentansprüche für folgende(n) Vertragsstaat(en): BE, CH, LI, ES, LU)

1. Verfahren zur Herstellung von homogenen Mehrkomponenten-Dispersionen, bei dem feindisperse Teilchen in einem wäßrigen und/oder organischen Medium dispergiert werden, dadurch gekennzeichnet, daß man
(a) im Falle des Vorliegens von Teilchensorten mit schlecht bzw. inkompatibler Natur der an der Oberfläche der Teilchensorten vorhandenen Gruppen X mindestens eine Sorte von Teilchen mit einer oder mehreren Spezies A in Kontakt bringt, die über mindestens eine Gruppe B und mindestens eine Gruppe Y verfügen, wobei unter den eingesetzten Bedingungen die Gruppen B mit auf der Oberfläche dieser mindestens einen Sorte von Teilchen vorhandenen Gruppen X kovalente, ionische oder Komplexbindungen ausbilden und die Gruppen Y Gruppen sind, die hinsichtlich ihrer Natur mit den Oberflächengruppen der übrigen in der Dispersion vorhandenen Teilchensorte(n) kompatibel sind; oder
(b) im Falle des Vorliegens von Teilchensorten, von denen mindestens eine Sorte von Teilchen auf der Oberfläche Gruppen X aufweist und mindestens eine andere Sorte von Teilchen auf der Oberfläche Gruppen W aufweist, diese Teilchen mit einer oder mehreren Spezies D in Kontakt bringt, die über mindestens eine Gruppe B und mindestens eine Gruppe E verfügen, wobei unter den eingesetzten Bedingungen zum einen die Gruppen X und die Gruppen B und zum anderen die Gruppen E und die Gruppen W kovalente, ionische oder Komplexbindungen ausbilden; oder
(c) im Falle des Vorliegens von Teilchensorten, deren mittleren Teilchengrößen sich mindestens um den Faktor 3 unterscheiden, die Teilchen separat als solche oder in Dispersion mit einander entgegengesetzten Oberflächenladungen versieht und die so behandelten Teilchen dann vermischt.

2. Verfahren nach Anspruch 1 (a), dadurch gekennzeichnet, daß es sich bei den Gruppen Y und den Oberflächengruppen der besagten übrigen Teilchensorte(n) der Dispersion jeweils um hydrophile (lipophobe) oder hydrophobe (lipophile) Gruppen handelt.

3. Verfahren nach Anspruch 2, dadurch gekennzeichnet, daß es sich bei den Gruppen Y und den Oberflächengruppen der besagten übrigen Teilchensorte(n) der Dispersion jeweils um saure oder basische Gruppen oder jeweils um hydrophobe Gruppen handelt.

4. Verfahren nach Anspruch 1 (b), dadurch gekennzeichnet, daß eine Sorte von Teilchen deutlich größer ist als die andere(n) Sorte(n) von Teilchen.

5. Verfahren nach Anspruch 1 (c), dadurch gekennzeichnet, daß man die größeren und die kleineren Teilchen separat dispergiert und die so hergestellten Dispersionen zusammengibt und vermischt, wobei die pH-Werte der separaten Dispersionen so gewählt werden, daß sowohl in diesen Dispersionen als auch in der resultierenden Dispersion die Zeta-Potentiale der Teilchensorten ein unterschiedliches Vorzeichen aufweisen.

6. Verfahren nach Anspruch 1 (c), dadurch gekennzeichnet, daß man zumindest eine Teilchensorte elektrostatisch auflädt, bevor man sie mit der anderen (entgegengesetzt geladenen) Teilchensorte in Kontakt bringt.

7. Verfahren nach irgendeinem der Ansprüche 1 bis 6, dadurch gekennzeichnet, daß die zu dispergierenden Teilchen aus festen Teilchen anorganischen oder metallischen Ursprungs, insbesondere Teilchen solcher Substanzen, die bei der Herstellung keramischer Materialien Verwendung finden können, und Kohlenstoffteilchen ausgewählt sind und vorzugsweise eine Teilchengröße im Bereich von 0,1 nm bis 10 µm aufweisen.

8. Verfahren nach irgendeinem der Ansprüche 1 bis 7, dadurch gekennzeichnet, daß die Teilchen solche aus Si, B, Al, Ti, Zr, W, Mo, Cr, Zn und den davon abgeleiteten (Misch-)Oxiden, Oxidhydraten, Nitriden, Carbiden, Siliziden, Boriden und Carbonitriden und Mischungen davon umfassen.

9. Verfahren nach irgendeinem der Ansprüche 1 bis 8, dadurch gekennzeichnet, daß mindestens eine der zu dispergierenden Teilchensorten eine mittlere Teilchengröße nicht über 100 nm aufweist.

10. Verfahren nach irgendeinem der Ansprüche 1 bis 4 und 7 bis 9, dadurch gekennzeichnet, daß die Gruppen B und Y bzw. die Gruppen B und E durch gegebenenfalls Heteroatome umfassende Kohlenwasserstoffreste miteinander verbunden sind.

11. Verfahren nach irgendeinem der Ansprüche 1 bis 4 und 7 bis 10, dadurch gekennzeichnet, daß die Spezies A bzw. D mindestens eine Gruppierung der Formel -MZₙR₃₋ₙ oder -AlZₘR₂₋ₘ umfassen, in der M für Si, Ti oder Zr steht, Z eine mit einer Oberflächengruppe X oder W reaktive Gruppe ist, R eine mit einer Oberflächengruppe X oder W nicht-reaktive Gruppe darstellt und gleiche oder unterschiedliche Gruppen repräsentiert, wenn (3-n) gleich 2 ist, n 1, 2 oder 3 ist und m 1 oder 2 ist.

12. Verfahren nach irgendeinem der Ansprüche 1 bis 4 und 7 bis 11, dadurch gekennzeichnet, daß mindestens eine der Gruppen B, E und Y ausgewählt wird aus Gruppen der Formel -COT, -SO₂T, -POT₂, -OPOT₂, -OH, -NHR¹ und -CO-CHR¹-CO-, wobei T für Halogen, -OCO-, -OR¹ und -NR¹₂ steht (und gleich oder verschieden sein kann) und R¹, gleich oder verschieden, H oder C₁₋₈-Alkyl repräsentiert und Y zusätzlich eine Gruppe der Formel -CR²₃ sein kann, in der R², gleich oder verschieden, für Wasserstoff, Halogen und C₁₋₈-Alkyl steht Und eine Gruppe R² auch OR³ oder SR³ (R³ = C₁₋₈-Alkyl oder C₆₋₁₂-Aryl) sein kann.

13. Homogene Dispersionen, erhältlich gemäß dem Verfahren von irgendeinem der Ansprüche 1 bis 12.

14. Verfahren zur Herstellung von homogenen Mehrkomponenten-Mischungen aus feindispersen Teilchen, dadurch gekennzeichnet, daß man aus den Dispersionen gemäß Anspruch 13 das Dispergiermedium entfernt und die so erhaltenen Teilchen gegebenenfalls wäscht, trocknet und/oder calciniert.

15. Verfahren zur Herstellung keramischer Materialien, Gläser und Komposite, dadurch gekennzeichnet, daß man darin homogene Dispersionen gemäß Anspruch 13 einsetzt.

## Claims (Claims for the following Contracting State(s): DE, FR, GB, IT, NL, SE :)

1. Process for producing homogeneous multicomponent dispersions in which finely divided particles are dispersed in an aqueous and/or organic medium, characterized in that
(a) if kinds of particles in which the groups present on the surface of the kinds of particles have a poorly compatible or incompatible nature are present, at least one kind of particles is brought into contact with species A which have at least one group B and at least one group Y, where under the conditions used the groups B form covalent, ionic or complex bonds with groups X present on the surface of this at least one kind of particles and the groups Y are groups which are compatible in terms of their nature with the surface groups of the other kind(s) of particles present in the dispersion; or
(b) if kinds of particles of which at least one kind of particles has groups X on the surface and at least one other kind of particles has groups W on the surface are present, these particles are brought into contact with species D which have at least one group B and at least one group E, where under the conditions used the groups X and the groups B on the one hand and the groups E and the groups W on the other hand form covalent, ionic or complex bonds; or
(c) if kinds of particles are present whose average particle sizes differ at least by a factor of 3, the particles are, separately as such or in dispersion, provided with opposite surface charges and the particles thus treated are then mixed,
provided that in case (a), if silicon carbide and at least one other ceramic material are present as kinds of particles, compatibility of these kinds of particles is not attained by superficial charges of the same polarity.

2. Process according to Claim 1 (a), characterized in that the groups Y and the surface groups of the said other kind(s) of particles in the dispersion are each hydrophilic (lipophobic) or hydrophobic (lipophilic) groups.

3. Process according to Claim 2, characterized in that the groups Y and the surface groups of the said other kind(s) of particles in the dispersion are each acid or basic groups or are each hydrophobic groups.

4. Process according to Claim 1 (b), characterized in that one kind of particles is significantly larger than the other kind(s) of particles.

5. Process according to Claim 1 (c), characterized in that the larger and the smaller particles are dispersed separately and the dispersions thus produced are combined and mixed, with the pH values of the separate dispersions being selected such that, both in these dispersions and also in the resulting dispersion, the zeta potentials of the kinds of particles have a different sign.

6. Process according to Claim 1 (c), characterized in that at least one kind of particles is electrostatically charged before it is brought into contact with the other (oppositely charged) kind of particles.

7. Process according to any of Claims 1 to 6, characterized in that the particles to be dispersed are selected from among solid particles of inorganic or metallic origin, in particular particles of those substances which can be used in the production of ceramic materials, and carbon particles and preferably have a particle size in the range from 0.1 nm to 10 µm.

8. Process according to any of Claims 1 to 7, characterized in that the particles comprise those of Si, B, Al, Ti, Zr, W, Mo, Cr, Zn and the (mixed) oxides, hydrated oxides, nitrides, carbides, silicides, borides and carbonitrides derived therefrom and mixtures thereof.

9. Process according to any of Claims 1 to 8, characterized in that at least one of the kinds of particles to be dispersed has a mean particle size not exceeding 100 nm.

10. Process according to any of Claims 1 to 4 and 7 to 9, characterized in that the groups B and Y or the groups B and E are linked to one another by means of hydrocarbon radicals which may also comprise hetero atoms.

11. Process according to any of Claims 1 to 4 and 7 to 10, characterized in that the species A or D comprise at least one group of the formula -MZₙR₃₋ₙ or -AlZₘR₂₋ₘ, where M is Si, Ti or Zr, Z is a group which is reactive with a surface group X or W, R are groups which are unreactive with a surface group X or W and are identical or different if (3-n) is equal to 2, n is 1, 2 or 3 and m is 1 or 2.

12. Process according to any of Claims 1 to 4 and 7 to 11, characterized in that at least one of the groups B, E and Y are selected from among groups of the formulae -COT, -SO₂T, -POT₂, -OPOT₂, -OH, -NHR¹ and -CO-CHR¹-CO-, where T are halogen, -OCO-, -OR¹ and -NR¹₂ (and can be identical or different) and R¹ are identical or different and are H or C₁₋₈-alkyl and Y can also be a group of the formula -CR²₃ where R² can be identical or different and are hydrogen, halogen and C₁₋₈-alkyl and one group R² can also be OR³ or SR³ (R³ = C₁₋₈-alkyl or C₆₋₁₂-aryl).

13. Homogeneous dispersions obtainable by the process of any of Claims 1 to 12.

14. Process for producing homogeneous multicomponent mixtures of finely divided particles, characterized in that the dispersion medium is removed from the dispersions according to Claim 13 and the particles thus obtained are, if desired, washed, dried and/or calcined.

15. Process for producing ceramic materials, glasses and composites, characterized in that use is made of homogeneous dispersions according to Claim 13.

## Claims (Claims for the following Contracting State(s): BE, CH, LI, ES, LU :)

1. Process for producing homogeneous multicomponent dispersions in which finely divided particles are dispersed in an aqueous and/or organic medium, characterized in that
(a) if kinds of particles in which the groups present on the surface of the kinds of particles have a poorly compatible or incompatible nature are present, at least one kind of particles is brought into contact with species A which have at least one group B and at least one group Y, where under the conditions used the groups B form covalent, ionic or complex bonds with groups X present on the surface of this at least one kind of particles and the groups Y are groups which are compatible in terms of their nature with the surface groups of the other kind(s) of particles present in the dispersion; or
(b) if kinds of particles of which at least one kind of particles has groups X on the surface and at least one other kind of particles has groups W on the surface are present, these particles are brought into contact with species D which have at least one group B and at least one group E, where under the conditions used the groups X and the groups B on the one hand and the groups E and the groups W on the other hand form covalent, ionic or complex bonds; or
(c) if kinds of particles are present whose average particle sizes differ at least by a factor of 3, the particles are, separately as such or in dispersion, provided with opposite surface charges and the particles thus treated are then mixed.

2. Process according to Claim 1 (a), characterized in that the groups Y and the surface groups of the said other kind(s) of particles in the dispersion are each hydrophilic (lipophobic) or hydrophobic (lipophilic) groups.

3. Process according to Claim 2, characterized in that the groups Y and the surface groups of the said other kind(s) of particles in the dispersion are each acid or basic groups or are each hydrophobic groups.

4. Process according to Claim 1 (b), characterized in that one kind of particles is significantly larger than the other kind(s) of particles.

5. Process according to Claim 1 (c), characterized in that the larger and the smaller particles are dispersed separately and the dispersions thus produced are combined and mixed, with the pH values of the separate dispersions being selected such that, both in these dispersions and also in the resulting dispersion, the zeta potentials of the kinds of particles have a different sign.

6. Process according to Claim 1 (c), characterized in that at least one kind of particles is electrostatically charged before it is brought into contact with the other (oppositely charged) kind of particles.

7. Process according to any of Claims 1 to 6, characterized in that the particles to be dispersed are selected from among solid particles of inorganic or metallic origin, in particular particles of those substances which can be used in the production of ceramic materials, and carbon particles and preferably have a particle size in the range from 0.1 nm to 10 µm.

8. Process according to any of Claims 1 to 7, characterized in that the particles comprise those of Si, B, Al, Ti, Zr, W, Mo, Cr, Zn and the (mixed) oxides, hydrated oxides, nitrides, carbides, silicides, borides and carbonitrides derived therefrom and mixtures thereof.

9. Process according to any of Claims 1 to 8, characterized in that at least one of the kinds of particles to be dispersed has a mean particle size not exceeding 100 nm.

10. Process according to any of Claims 1 to 4 and 7 to 9, characterized in that the groups B and Y or the groups B and E are linked to one another by means of hydrocarbon radicals which may also comprise hetero atoms.

11. Process according to any of Claims 1 to 4 and 7 to 10, characterized in that the species A or D comprise at least one group of the formula -MZₙR₃₋ₙ or -AlZₘR₂₋ₘ, where M is Si, Ti or Zr, Z is a group which is reactive with a surface group X or W, R are groups which are unreactive with a surface group X or W and are identical or different if (3-n) is equal to 2, n is 1, 2 or 3 and m is 1 or 2.

12. Process according to any of Claims 1 to 4 and 7 to 11, characterized in that at least one of the groups B, E and Y are selected from among groups of the formulae -COT, -SO₂T, -POT₂, -OPOT₂, -OH, -NHR¹ and -CO-CHR¹-CO-, where T are halogen, -OCO-, -OR¹ and -NR¹₂ (and can be identical or different) and R¹ are identical or different and are H or C₁₋₈-alkyl and Y can also be a group of the formula -CR²₃ where R² can be identical or different and are hydrogen, halogen and C₁₋₈-alkyl and one group R² can also be OR³ or SR³ (R₃ = C₁₋₈-alkyl or C₆₋₁₂-aryl).

13. Homogeneous dispersions obtainable by the process of any of Claims 1 to 12.

14. Process for producing homogeneous multicomponent mixtures of finely divided particles, characterized in that the dispersion medium is removed from the dispersions according to Claim 13 and the particles thus obtained are, if desired, washed, dried and/or calcined.

15. Process for producing ceramic materials, glasses and composites, characterized in that use is made of homogeneous dispersions according to Claim 13.

## Revendications (Revendications pour l'(les) Etat(s) contractant(s) suivant(s): DE, FR, GB, IT, NL, SE :)

1. Procédé de préparation de dispersions homogènes à plusieurs constituants, dans lequel des particules finement dispersées sont dispersées dans un milieu aqueux et/ou organique, **caractérisé** en ce que :
a) dans le cas de la présence de types de particules sur la surface desquels sont présents des groupes X ayant une nature peu compatible ou incompatible, on met au moins un type de particules en contact avec une ou plusieurs espèces A qui disposent d'au moins un groupe B et au moins un groupe Y, les groupes B formant dans les conditions utilisées des liaisons covalentes, ioniques ou de complexation avec les groupes X présents sur la surface de ce au moins un type de particules, et les groupes Y étant des groupes qui en ce qui concerne leur nature sont compatibles avec les groupes en surface de l'autre ou des autres types de particules présents dans la dispersion, ou bien
b) dans le cas de la présence de types de particules dont au moins un type de particules présente sur la surface des groupes X et au moins un autre type de particules présente sur la surface des groupes W, on met ces particules en contact avec une ou plusieurs espèces D qui disposent d'au moins un groupe B et d'au moins un groupe E, les groupes X et les groupes B formant d'une part dans les conditions utilisées des liaisons covalentes, ioniques ou de complexation et les groupes E et les groupes W formant d'autre part dans les conditions utilisées des liaisons covalentes, ioniques ou de complexation, ou bien
c) dans le cas de la présence de types de particules dont les tailles moyennes de particule diffèrent d'au moins un facteur 3, on munit les particules séparément, telles quelles ou en dispersion, de charges en surface opposées les unes aux autres et on mélange ensuite les particules ainsi traitées,
étant entendu que, lors de la présence de carbure de silicium et d'au moins une autre matière céramique comme types de particules dans le cas a), la compatibilité des types de particules n'est pas obtenue par des charges en surface de même polarité.

2. Procédé selon la revendication 1 a), **caractérisé** en ce que les groupes Y et les groupes en surface dudit autre ou desdits autres types de particules de la dispersion sont à chaque fois des groupes hydrophiles (lipophobes) ou hydrophobes (lipophiles).

3. Procédé selon la revendication 2, **caractérisé** en ce que les groupes Y et les groupes en surface dudit autre ou desdits autres types de particules de la dispersion sont à chaque fois des groupes acides ou basiques ou à chaque fois des groupes hydrophobes.

4. Procédé selon la revendication 1 b), **caractérisé** en ce qu'un type de particules est nettement plus gros que l'autre type ou les autres types de particules.

5. Procédé selon la revendication 1 c), **caractérisé** en ce que l'on disperse séparément les particules les plus grosses et les particules les plus petites et on réunit et mélange les dispersions ainsi préparées, les pH des dispersions séparées étant choisis de telle manière que les potentiels zêta des types de particules présentent des signes différents aussi bien dans ces dispersions qu'également dans la dispersion résultante.

6. Procédé selon la revendication 1 c), **caractérisé** en ce que l'on charge électrostatiquement au moins un type de particules avant de le mettre en contact avec l'autre type de particules (de charge opposée).

7. Procédé selon l'une quelconque des revendications 1 à 6, **caractérisé** en ce que les particules à disperser sont choisies parmi des particules solides d'origine minérale ou métallique, en particulier des particules de substances qui peuvent être utilisées pour la préparation de matières céramiques, et des particules de carbone, et présentent de préférence une taille de particule située dans l'intervalle allant de 0,1 nm a 10 µm.

8. Procédé selon l'une quelconque des revendications 1 à 7, **caractérisé** en ce que les particules englobent les particules de Si, B, Al, Ti, Zr, W, Mo, Cr ou Zn, celles en oxydes, oxydes mixtes, oxydes hydratés, nitrures, carbures, siliciures, borures ou carbonitrures, dérivés des éléments précédents, et leurs mélanges.

9. Procédé selon l'une quelconque des revendications 1 à 8, **caractérisé** en ce qu'au moins l'un des types de particules à disperser présente une taille moyenne de particule non supérieure à 100 nm.

10. Procédé selon l'une quelconque des revendications 1 à 4 et 7 à 9, **caractérisé** en ce que les groupes B et Y ou les groupes B et E sont reliés les uns aux autres par des restes hydrocarbonés comprenant éventuellement des hétéroatomes.

11. Procédé selon l'une quelconque des revendications 1 à 4 et 7 à 10, **caractérisé** en ce que les espèces A ou D contiennent au moins un groupement de formule -MZₙR₃₋ₙ ou -AlZₘR₂₋ₘ, dans laquelle M représente Si, Ti ou Zr, Z représente un groupe apte à réagir avec un groupe X ou W en surface, R représente un groupe inapte à réagir avec un groupe X ou W en surface et les R représentent des groupes identiques ou différents lorsque (3-n) est égal à 2, n est égal à 1, 2 ou 3 et m est égal à 1 ou 2.

12. Procédé selon l'une quelconque des revendications 1 à 4 et 7 à 11, **caractérisé** en ce qu'au moins l'un des groupes B, E et Y est choisi parmi les groupes de formules -COT, -SO₂T, -POT₂, -OPOT₂, -OH, -NHR¹ et -CO-CHR¹-CO-, dans lesquelles T représente un atome d'halogène ou un groupe -OCO-, -OR¹ ou -NR₂¹ et les T peuvent être identiques ou différents, et R¹ représente un atome d'hydrogène ou un groupe alkyle en C₁ à C₈, les R¹ pouvant être identiques ou différents, et Y peut être en outre un groupe de formule -CR₃² dans laquelle les R² sont identiques ou différents et représentent chacun un atome d'hydrogène ou d'halogène ou un groupe alkyle en C₁ à C₈, un groupe R² pouvant être également un groupe OR³ ou SR³ (R³ = groupe alkyle en C₁ à C₈ ou groupe aryle en C₆ à C₁₂).

13. Dispersions homogènes que l'on peut obtenir par le procédé selon l'une quelconque des revendications 1 à 12.

14. Procédé de préparation de mélanges homogènes à plusieurs constituants, constitués de particules finement dispersées, **caractérisé** en ce que l'on élimine le milieu de dispersion des dispersions selon la revendication 13 et on lave, sèche et/ou calcine éventuellement les particules ainsi obtenues.

15. Procédé de préparation de matières céramiques, de verres et de composites, **caractérisé** en ce que l'on y utilise des dispersions homogènes selon la revendication 13.

## Revendications (Revendications pour l'(les) Etat(s) contractant(s) suivant(s): BE, CH, LI, ES, LU :)

1. Procédé de préparation de dispersions homogènes à plusieurs constituants, dans lequel des particules finement dispersées sont dispersées dans un milieu aqueux et/ou organique, **caractérisé** en ce que :
a) dans le cas de la présence de types de particules sur la surface desquels sont présents des groupes X ayant une nature peu compatible ou incompatible, on met au moins un type de particules en contact avec une ou plusieurs espèces A qui disposent d'au moins un groupe B et au moins un groupe Y, les groupes B formant dans les conditions utilisées des liaisons covalentes, ioniques ou de complexation avec les groupes X présents sur la surface de ce au moins un type de particules, et les groupes Y étant des groupes qui en ce qui concerne leur nature sont compatibles avec les groupes en surface de l'autre ou des autres types de particules présents dans la dispersion, ou bien
b) dans le cas de la présence de types de particules dont au moins un type de particules présente sur la surface des groupes X et au moins un autre type de particules présente sur la surface des groupes W, on met ces particules en contact avec une ou plusieurs espèces D qui disposent d'au moins un groupe B et d'au moins un groupe E, les groupes X et les groupes B formant d'une part dans les conditions utilisées des liaisons covalentes, ioniques ou de complexation et les groupes E et les groupes W formant d'autre part dans les conditions utilisées des liaisons covalentes, ioniques ou de complexation, ou bien
c) dans le cas de la présence de types de particules dont les tailles moyennes de particule diffèrent d'au moins un facteur 3, on munit les particules séparément, telles quelles ou en dispersion, de charges en surface opposées les unes aux autres et on mélange ensuite les particules ainsi traitées.

2. Procédé selon la revendication 1 a), **caractérisé** en ce que les groupes Y et les groupes en surface dudit autre ou desdits autres types de particules de la dispersion sont à chaque fois des groupes hydrophiles (lipophobes) ou hydrophobes (lipophiles).

3. Procédé selon la revendication 2, **caractérisé** en ce que les groupes Y et les groupes en surface dudit autre ou desdits autres types de particules de la dispersion sont à chaque fois des groupes acides ou basiques ou à chaque fois des groupes hydrophobes.

4. Procédé selon la revendication 1 b), **caractérisé** en ce qu'un type de particules est nettement plus gros que l'autre type ou les autres types de particules.

5. Procédé selon la revendication 1 c), **caractérisé** en ce que l'on disperse séparément les particules les plus grosses et les particules les plus petites et on réunit et mélange les dispersions ainsi préparées, les pH des dispersions séparées étant choisis de telle manière que les potentiels zêta des types de particules présentent des signes différents aussi bien dans ces dispersions qu'également dans la dispersion résultante.

6. Procédé selon la revendication 1 c), **caractérisé** en ce que l'on charge électrostatiquement au moins un type de particules avant de le mettre en contact avec l'autre type de particules (de charge opposée).

7. Procédé selon l'une quelconque des revendications 1 à 6, **caractérisé** en ce que les particules à disperser sont choisies parmi des particules solides d'origine minérale ou métallique, en particulier des particules de substances qui peuvent être utilisées pour la préparation de matières céramiques, et des particules de carbone, et présentent de préférence une taille de particule située dans l'intervalle allant de 0,1 nm à 10 µm.

8. Procédé selon l'une quelconque des revendications 1 à 7, **caractérisé** en ce que les particules englobent les particules de Si, B, Al, Ti, Zr, W, Mo, Cr ou Zn, celles en oxydes, oxydes mixtes, oxydes hydratés, nitrures, carbures, siliciures, borures ou carbonitrures, dérivés des éléments précédents, et leurs mélanges.

9. Procédé selon l'une quelconque des revendications 1 à 8, **caractérisé** en ce qu'au moins l'un des types de particules à disperser présente une taille moyenne de particule non supérieure à 100 nm.

10. Procédé selon l'une quelconque des revendications 1 à 4 et 7 à 9, **caractérisé** en ce que les groupes B et Y ou les groupes B et E sont reliés les uns aux autres par des restes hydrocarbonés comprenant éventuellement des hétéroatomes.

11. Procédé selon l'une quelconque des revendications 1 à 4 et 7 à 10, **caractérisé** en ce que les espèces A ou D contiennent au moins un groupement de formule -MZₙR₃₋ₙ ou -AlZₘR₂₋ₘ, dans laquelle M représente Si, Ti ou Zr, Z représente un groupe apte à réagir avec un groupe X ou W en surface, R représente un groupe inapte à réagir avec un groupe X ou W en surface et les R représentent des groupes identiques ou différents lorsque (3-n) est égal à 2, n est égal à 1, 2 ou 3 et m est égal à 1 ou 2.

12. Procédé selon l'une quelconque des revendications 1 à 4 et 7 à 11, **caractérisé** en ce qu'au moins l'un des groupes B, E et Y est choisi parmi les groupes de formules -COT, -SO₂T, -POT₂, -OPOT₂, -OH, -NHR¹ et -CO-CHR¹-CO-, dans lesquelles T représente un atome d'halogène ou un groupe -OCO-, -OR¹ ou -NR₂¹ et les T peuvent être identiques ou différents, et R¹ représente un atome d'hydrogène ou un groupe alkyle en C₁ à C₈, les R¹ pouvant être identiques ou différents, et Y peut être en outre un groupe de formule -CR₃² dans laquelle les R² sont identiques ou différents et représentent chacun un atome d'hydrogène ou d'halogène ou un groupe alkyle en C₁ à C₈, un groupe R² pouvant être également un groupe OR³ ou SR³ (R³ = groupe alkyle en C₁ à C₈ ou groupe aryle en C₆ à C₁₂).

13. Dispersions homogènes que l'on peut obtenir par le procédé selon l'une quelconque des revendications 1 à 12.

14. Procédé de préparation de mélanges homogènes à plusieurs constituants, constitués de particules finement dispersées, **caractérisé** en ce que l'on élimine le milieu de dispersion des dispersions selon la revendication 13 et on lave, sèche et/ou calcine éventuellement les particules ainsi obtenues.

15. Procédé de préparation de matières céramiques, de verres et de composites, **caractérisé** en ce que l'on y utilise des dispersions homogènes selon la revendication 13.
